# EUROPÄISCHE PATENTSCHRIFT

(11) **EP 1 097 840 B1**
(45) Veröffentlichungstag und Bekanntmachung des Hinweises auf die Patenterteilung: **17.03.2004**
(21) Anmeldenummer: 00121822.1
(22) Anmeldetag: 06.10.2000
(51) Int. Cl.: B60Q 1/42

(54) **Lenkeinrichtung für ein Fahrzeug**
Steering apparatus for a vehicle
Direction pour véhicule

(30) Priorität: 08.11.1999 DE 19953575
(43) Veröffentlichungstag der Anmeldung: 09.05.2001
(73) Patentinhaber: Valeo Schalter und Sensoren GmbH, 74321 Bietigheim-Bissingen (DE)
(72) Erfinder: Klein, Rudolf, 74348 Lauffen (DE); Mozer, Reiner, 71665 Vaihingen/Enz (DE)
(74) Vertreter: Steimle, Josef, Dipl.-Ing.

(56) Entgegenhaltungen:
- US-A- 3 413 426
- US-A- 3 609 264
- US-A- 4 722 646
- PATENT ABSTRACTS OF JAPAN vol. 1996, no. 10, 31. Oktober 1996 (1996-10-31) & JP 08 142872 A (TOKAI RIKA CO LTD), 4. Juni 1996 (1996-06-04)

## Beschreibung

Die Erfindung betrifft eine Lenkeinrichtung für ein Fahrzeug mit einem um eine Lenkachse drehbar angeordneten Lenkrad, mit den Merkmalen des Oberbegriffs das Anspruches 1.

Solche bekannten Lenkeinrichtungen sind dafür vorgesehen, das Auslöseelement mit dem Lenkrad drehfest zu verbinden. Als Auslöseelement kommt hierbei insbesondere die Codescheibe eines Lenkwinkelsensors oder auch ein Auslösering zur Betätigung eines Rückstellschalters zur Rückstellung eines geschalteten Blinkerhebels in Betracht. Bei bekannten Lenkeinrichtungen ist das Mitnahmeelement als Mitnahmezapfen in den Auslösering fest eingeformt. Zur Aufnahme dieser Mitnahmezapfen weist das Lenkrad in der Regel Bohrungen auf. Bei der Montage des Lenkrades auf die Lenkspindel ist darauf zu achten, dass die Mitnahmezapfen in die an der dem Auslöseelement zugewandten Seite des Lenkrades vorhandenen Bohrungen eingeführt werden. Dieses Einführen der Mitnahmezapfen erfordert viel Aufmerksamkeit, Erfahrung und ist mit einem erhöhten Montageaufwand verbunden. Werden die Mitnahmezapfen nicht korrekt in die entsprechenden Bohrungen eingeführt, so kann dies zu Beschädigungen an dem Auslöseelement oder auch an den Mitnahmezapfen selbst führen.

Aus der US-A-3,413,426 ist eine Vorrichtung bekannt, bei der das Lenkrad über einen federbelasteten Bolzen mit einem Auslösering verbunden ist. Dabei hat sich gezeigt, dass eine derartige Verbindung zwar zur Drehmitnahme eines Auslöseringes für die Blinkerrückstellung genügt, jedoch zum Ankuppeln z.B. einer Drehwinkelmesseinrichtung für das Lenkrad ungeeignet ist, da die Längsführung des Bolzens in seiner Aufnahme zu spielbehaftet ist und das Spiel sich als Messfehler auswirken würde.

Der vorliegenden Erfindung liegt deshalb die Aufgabe zugrunde, eine Lenkeinrichtung vorzuschlagen, bei welcher das Lenkrad mit weniger Spiel mit einem Auslösering verbunden ist und trotzdem der Montageaufwand des Lenkrades reduziert und das Lenkrad ohne Berücksichtigung der Stellung des Auslöseelements montierbar ist.

Zur Lösung der Aufgabe wird eine Lenkeinrichtung vorgeschlagen, die die Merkmale des Anspruches 1 aufweist.

Erfindungsgemäß ist vorgesehen, dass die Aussparung eine in dem Auslöseelement angeordnete Senkung mit einem an dem dem Lenkrad abgewandten Boden der Senkung angeordneten Durchgangsloch ist, dass das Mitnahmeelement die Senkung und das Durchgangsloch durchgreift, dass das Mitnahmeelement im Bereich zwischen dem Durchgangsloch und dem dem Lenkrad zugewandten Ende einen dem Durchgangsloch zugewandten Absatz aufweist und dass zwischen dem Absatz und dem Boden der Senkung das Federelement angeordnet ist. Eine solche Ausgestaltung weist den Vorteil auf, dass das Mitnahmeelement auf einfache Art und Weise und dennoch funktionssicher an dem Auslöseelement versenkbar angeordnet ist und an zwei Stellen abgestützt wird, wodurch das radiale Spiel verringert wird.

Die erfindungsgemäße Lenkeinrichtung hat immer noch den Vorteil, dass das Lenkrad ohne Berücksichtigung der Stellung des Auslöseelements montiert werden kann. Dabei sind grundsätzlich zwei Varianten zu unterscheiden.

Zum einen kann das Mitnahmeelement an dem Auslöseelement angeordnet sein. Wird das Lenkrad montiert, ohne dass das Mitnahmeelement in einer dafür vorgesehenen Position ist, so wird es durch das Lenkrad entgegen der Federkraft in das Auslöseelement gedrückt bzw. darin weitgehend versenkt. Durch Drehen des Lenkrades nach dessen Montage ist das Auslöseelement zunächst nicht drehfest mit dem Lenkrad verbunden, da das Mitnahmeelement nicht an der dafür vorgesehen Position vorhanden ist. Durch Drehen des Lenkrades wird die vorgesehene Position des Mitnahmeelements erreicht, in welche das Mitnahmeelement aufgrund der Federbelastung einschnappt und das Lenkrad mit dem Auslöseelement drehfest verbindet.

Bei der anderen Variante ist vorgesehen, dass das Mitnahmeelement in dem Lenkrad weitgehend versenkbar ist. Wird bei der Montage des Lenkrades das Mitnahmeelement nicht an der dafür vorgesehenen Position auf dem Auslöseelement montiert, so ist dieses entgegen der Federkraft in dem Lenkrad versenkt. Bei einer Verdrehung des Lenkrades nach dessen Montage schnappt bzw. rastet das Mitnahmeelement in der dafür vorgesehenen Position in das Auslöseelement, so dass eine drehfeste Verbindbarkeit des Auslöseelements mit dem Lenkrad erreichbar ist.

Besonderer Vorteil der erfindungsgemäßen Lenkeinrichtung ist also, dass das Lenkrad in jeder Stellung, unabhängig von der des Auslöseelements, montierbar ist, ohne dass Teile beschädigt werden können.

Bei einer besonders bevorzugten Ausführungsform der Erfindung ist vorgesehen, dass zur Versenkbarkeit des Mitnahmeelements in dem Auslöseelement oder in dem Lenkrad eine Aussparung vorhanden ist. In einer solchen Aussparung kann das Mitnahmeelement innerhalb des Auslöseelements oder des Lenkrades funktionssicher angeordnet sein. Vorteilhafterweise ist bei montiertem Lenkrad ein Zugriff auf das Mitnahmeelement und damit eine negative Beeinflussung des Mitnahmeelements nicht möglich.

Bei einer Weiterbildung der Erfindung ist vorgesehen, dass das das versenkbare Mitnahmeelement nicht aufweisende Lenkrad oder Auslöseelement eine Rastbucht zur Einrastung des dem der Rastbucht zugewandten Endes des Mitnahmeelements aufweist. Durch eine solche definierte Rastbucht ist ein sicheres Einrasten des Mitnahmeelements in die Rastbucht und damit eine funktionssichere drehfeste Verbindung des Auslöseelements mit dem Lenkrad gewährleistet.

Bei einer anderen Ausgestaltung der Erfindung ist die Rastbucht ein kreiszylindrisches Sackloch. Insbesondere ein solches Sackloch lässt sich auf einfache und kostengünstige Art und Weise realisieren.

Eine Weiterbildung der Erfindung kennzeichnet sich dadurch, dass das Auslöseelement ein Auslösering mit einem Auslösesegment ist. Gerade ein solcher Auslösering lässt sich auf einfache Art und Weise drehbar um die Lenkachse bzw. an dem Mantelrohr der Lenksäule anordnen. Das Auslösesegment auf dem Auslösering ist dafür vorgesehen, die Auslösung des Auslöseelements zu betätigen.

Bei einer Variante der Erfindung ist das Auslöseelement eine Codescheibe eines Lenkwinkelsensors mit Auslösesegment. Das Auslösesegment, beispielsweise eine Rastnocke, eines solches Lenkwinkelsensors kann insbesondere dafür vorgesehen sein, ein Zählwerk zur Zählung der vollen Umdrehungen des Lenkrades zu schalten.

Dabei kann vorteilhafterweise vorgesehen sein, dass das dem Lenkrad abgewandte Ende des Mitnahmeelements das Durchgangsloch hintergreift. Damit wird insbesondere verhindert, dass das Mitnahmeelement aufgrund der Federbelastung in nicht montiertem Zustand des Lenkrades verloren gehen kann.

Bei einer Weiterbildung dieser Ausgestaltung der Erfindung greift das dem Lenkrad zugewandte Ende des Mitnahmeelements in die an dem Lenkrad vorhandene Rastbucht zur drehsicheren Verbindung des Auslöseelements ein. Auf diese Art und Weise kann eine drehsichere Verbindung einfach und funktionssicher realisiert werden.

Bei einer Variante der Erfindung ist das dem Lenkrad zugewandte Ende des Mitnahmeelements angefast. Durch eine solche Anfasung wird insbesondere ein erleichtertes Einrasten des Mitnahmeelements in die dafür vorgesehene Rastbucht erreicht.

Je nach Ausführungsform der erfindungsgemäßen Lenkeinrichtung ist das Federelement eine Spiral-, Blatt-, Schrauben-, Zug-, Tellerfeder oder dergl.

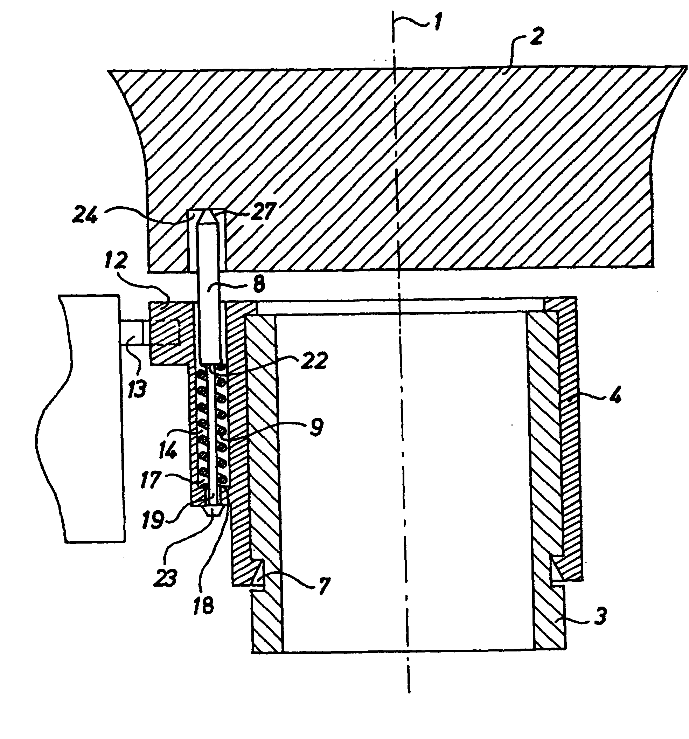

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist eine erfindungsgemäße Lenkeinrichtung im Längsschnitt dargestellt. Gezeigt ist ein um eine Lenkachse 1 drehbar angeordneter Ausschnitt eines Lenkrades 2. Das Lenkrad 2 ist dabei an einem in der Zeichnung nicht dargestellten, um die Lenkachse 1 drehbar angeordneten Lenkrohr drehfest verbunden. Das Lenkrohr ist von einem Mantelrohr 3 umgeben, welches ortsfest an dem Fahrzeug angeordnet ist. Das dem Lenkrad 2 zugewandte Ende des Mantelrohrs 3 ist von einem um die Lenkachse 1 drehbar gelagerten Auslöseelement 4 umgeben. Das Auslöseelement 4 greift zur Halterung auf dem Mantelrohr 3 in eine an dem Mantelrohr 3 vorhandene Ringnut 7. Zur drehfesten Verbindbarkeit des Auslöseelements 4 mit dem Lenkrad 2 ist ein bolzenartiges Mitnahmeelement 8 vorhanden, welches in dem Auslöseelement 4 weitgehend versenkbar ist. Das Mitnahmeelement 8 wird von einer der Versenkbarkeit entgegengerichteten Federkraft eines Federelements 9, nämlich einer Spiralfeder, beaufschlagt.

Das Auslöseelement 4 ist als Auslösering mit einem Auslösesegment 12 ausgestaltet. Bei jeder vollen Drehung des Auslöseelements 4 um die Lenkachse 1 wird ein mit dem Auslösesegment 12 korrespondierender Auslösenocken 13 betätigt, der wiederum die Auslösung eines entsprechenden Vorgangs einleitet bzw. schaltet.

Zur Versenkbarkeit des Mitnahmeelements 8 in dem Auslöseelement 4 weist das Auslöseelement 4 eine Aussparung 14, nämlich eine Senkung 17, mit einem an dem dem Lenkrad 2 abgewandten Boden 18 der Senkung 17 angeordneten Durchgangsloch 19 auf. Wie in der Figur deutlich zu erkennen ist, durchgreift das Mitnahmeelement 8 die Senkung 17 und das Durchgangsloch 19. Außerdem weist das Mitnahmeelement 8 im Bereich zwischen dem Durchgangsloch 19 und dem dem Lenkrad 2 zugewandten Ende einen dem Durchgangsloch 19 zugewandten Absatz 22 auf. Zwischen dem Absatz 22 und dem Boden 18 der Senkung 17 ist das Federelement 9 angeordnet. Aus der Figur ist außerdem zu entnehmen, dass das dem Lenkrad 2 abgewandte Ende des Mitnahmeelements 8 das Durchgangsloch 19 hintergreift. Dazu weist das Mitnahmeelement 8 einen flanschartigen Ansatz 23 auf. Dadurch ist das Mitnahmeelement 8 in der Aussparung 14 gefangen und kann nicht, insbesondere bei einer Demontage der Lenkeinrichtung, verloren gehen. Die Senkung 17 in dem Auslöseelement 4 ist so tief ausgestaltet, dass das Mitnahmeelement 8 vollständig in dem Auslöseelement 4 versenkbar ist.

Zur Aufnahme und Einrastung des Mitnahmeelements 8 weist das Lenkrad 2 auf seiner dem Auslöseelement 4 zugewandten Seite eine Rastbucht 24 auf. Die Rastbucht 24 ist dabei als kreiszylindrisches Sackloch ausgestaltet. Außerdem weist das dem Lenkrad 2 zugewandte Ende des Mitnahmeelements 8 eine Anfasung 27 auf.

Bei der Montage des Lenkrades 2 an dem in der Figur nicht dargestellten Lenkrohr ist die Stellung des Auslöseelements 4 erfindungsgemäß vernachlässigbar. Regelmäßig wird das Mitnahmeelement 8 bei der Montage nicht in die dafür vorgesehene Rastbucht 24 eingreifen. Vielmehr wird das Mitnahmeelement 8 durch das Lenkrad 2 in die Aussparung 14 entgegen der durch die Feder 9 erzeugte Federkraft versenkt bzw. gedrückt. Nach der Montage des Lenkrades 2 kann durch Drehen des Lenkrades 2 erreicht werden, dass die Rastbucht 24 über das Mitnahmeelement 8 gedreht wird und das Mitnahmeelement 8 zur drehsicheren Verbindung des Lenkrades 2 mit dem Auslöseelement 4 in die Rastbucht 24 einrastet.

Außerdem ist bei der Montage des Lenkrades 2 eine Beschädigung des Lenkrades 2 aufgrund der Versenkbarkeit des Mitnahmeelements 8 ausgeschlossen. Aufgrund der erfindungsgemäßen Lenkeinrichtung ist folglich eine schnelle, einfache und funktionssichere Montage des Lenkrades 2 an dem Fahrzeug bzw. dem Lenkrohr möglich.

## Patentansprüche

1. Lenkeinrichtung für ein Fahrzeug mit einem um eine Lenkachse (1) drehbar angeordneten Lenkrad (2), mit einem um die Lenkachse (1) drehbar gelagerten Auslöseelement (4) und mit wenigstens einem, insbesondere bolzenartigen Mitnahmeelement (8) zwischen dem Auslöseelement (4) und dem Lenkrad (2) zur drehfesten Verbindbarkeit des Auslöseelements (4) mit dem Lenkrad (2), wobei das Mitnahmeelement (8) in dem Auslöseelement (4) oder in dem Lenkrad (2) wenigstens weitgehend versenkbar ist und das Mitnahmeelement (8) von einer der Versenkbarkeit entgegengerichteten Federkraft eines Federelements (9) beaufschlagt ist, und zur Versenkbarkeit des Mitnahmeelements (8) in dem Auslöseelement (4) oder in dem Lenkrad eine Aussparung (14) vorhanden ist, **dadurch gekennzeichnet, dass** die Aussparung (14) eine Senkung (17) mit einem im Boden (18) der Senkung (17) angeordneten Durchgangsloch (19) ist, dass das Mitnahmeelement (8) die Senkung (17) und das Durchgangsloch (19) durchgreift, dass das Mitnahmeelement (8) innerhalb der Senkung (17) einen dem Durchgangsloch (19) zugewandten Absatz (22) aufweist und dass zwischen dem Absatz (22) und dem Boden (18) der Senkung (17) das Federelement (9) angeordnet ist.

2. Lenkeinrichtung nach Anspruch 1, **dadurch gekennzeichnet, dass** das das versenkbare Mitnahmeelement (8) nicht aufweisende Lenkrad (2) oder Auslöseelement (4) eine Rastbucht (24) zur Einrastung des dem der Rastbucht (24) zugewandten Endes des Mitnahmeelements (8) aufweist.

3. Lenkeinrichtung nach einem der vorhergehenden Ansprüche, **dadurch gekennzeichnet, dass** die Rastbucht (24) ein kreiszylindriches Sackloch ist.

4. Lenkeinrichtung nach einem der vorhergehenden Ansprüche, **dadurch gekennzeichnet, dass** das Auslöseelement (4) ein Auslösering mit einem Auslösesegment (12) ist.

5. Lenkeinrichtung nach einem der vorhergehenden Ansprüche, **dadurch gekennzeichnet, dass** das Auslöseelement (4) eine Codescheibe eines Lenkwinkelsensors mit einem Auslösesegment ist.

6. Lenkeinrichtung nach einem der vorhergehenden Ansprüche, **dadurch gekennzeichnet, dass** das Ende des vom Absatz (22) abragenden Abschnitts des Mitnahmeelements (8) das Durchgangsloch (19) hintergreift.

7. Lenkeinrichtung nach einem der vorhergehenden Ansprüche, **dadurch gekennzeichnet, dass** das dem Lenkrad (2) zugewandte Ende des Mitnahmeelements (8) in die an dem Lenkrad (2) vorhandene Rastbucht (24) zur drehsicheren Verbindung des Auslöseelements (4) eingreift.

8. Lenkeinrichtung nach einem der vorhergehenden Ansprüche, **dadurch gekennzeichnet, dass** das dem Lenkrad (2) zugewandte Ende des Mitnahmeelements (8) angefast ist.

9. Lenkeinrichtung nach einem der vorhergehenden Ansprüche, **dadurch gekennzeichnet, dass** das Federelement (9) eine Spiral-, Blatt-, Schrauben-, Zug-, Tellerfeder odgl. ist.

## Claims

1. Steering apparatus for a vehicle comprising a steering wheel (2) rotatably arranged about a steering axle (1), comprising a release element (4) rotatably mounted about the steering axle (1), and comprising at least one, in particular bolt-like, follower (8) between the release element (4) and the steering wheel (2) for connecting the release element (4) to the steering wheel (2) in a non-rotatable manner, it being possible to lower the follower (8) in the release element (4) or in the steering wheel (2), at least to a large extent, and the follower (8) being loaded by a spring force of a spring element (9), directed against the lowering action, and a recess (14) being provided to lower the follower (8) in the release element (4) or in the steering wheel, **characterised in that** the recess (14) is a depression (17) comprising a through hole (19) arranged in the base (18) of the depression (17), that the follower (8) penetrates the depression (17) and the through hole (19), that the follower (8) within the depression (17) comprises a ledge (22) facing the through hole (19), and that the spring element (9) is arranged between the ledge (22) and the base (18) of the depression (17).

2. Steering apparatus according to claim 1, **characterised in that** the steering wheel (2) or release element (4) that does not comprise the follower (8) which can be lowered, comprises a detent catch (24) for engaging the end of the follower (8) facing the detent catch (24).

3. Steering apparatus according to any one of the preceding claims, **characterised in that** the detent catch (24) is a circular cylindrical blind hole.

4. Steering apparatus according to any one of the preceding claims, **characterised in that** the release element (4) is a release ring comprising a release segment (12).

5. Steering apparatus according to any one of the preceding claims, **characterised in that** the release element (4) is a code disc of a steering angle sensor comprising a release segment.

6. Steering apparatus according to any one of the preceding claims, **characterised in that** the end of the portion of the follower (8) protruding from the ledge (22) penetrates behind the through hole (19).

7. Steering apparatus according to any one of the preceding claims, **characterised in that** the end of the follower (8) facing the steering wheel (2) engages with the detent catch (24) that is provided on the steering wheel (2), in order to connect the release element (4) in a non-rotatable manner.

8. Steering apparatus according to any one of the preceding claims, **characterised in that** the end of the follower (8) facing the steering wheel (2) is chamfered.

9. Steering apparatus according to any one of the preceding claims, **characterised in that** the spring element (9) is a spiral spring, leaf spring, coil spring, tension spring, spring washer or the like.

## Revendications

1. Système de direction pour un véhicule avec un volant (2) disposé de façon rotative autour d'un axe de direction (1), avec un élément de déclenchement (4) logé de façon rotative autour de l'axe de direction (1) et avec au moins un élément d'entraînement (8), en particulier du type boulon, entre l'élément de déclenchement (4) et le volant (2) pour la possibilité de liaison solidaire en rotation de l'élément de déclenchement (4) avec le volant (2), l'élément d'entraînement (8) pouvant être enfoncé au moins largement dans l'élément de déclenchement (4) ou dans le volant (2) et l'élément d'entraînement (8) pouvant être sollicité par une force de ressort, opposée à la possibilité d'enfoncement, d'un élément de ressort (9), et un évidement (14) étant présent dans l'élément de déclenchement (4) ou dans le volant pour la possibilité d'enfoncement de l'élément d'entraînement (8), **caractérisé en ce que** l'évidement (14) est une cavité (1) avec un trou de passage (19) disposé dans le fond (18) de la cavité (17), **en ce que** l'élément d'entraînement (8) passe par la cavité (10) et le trou de passage (19), **en ce que** l'élément d'entraînement (8) présente à l'intérieur de la cavité (17) un décrochement (22) tourné vers le trou de passage (19) et l'élément de ressort (9) est disposé entre le décrochement (22) et le fond (18) de la cavité (17).

2. Système de direction selon la revendication 1, **caractérisé en ce que** le volant (2) ou l'élément de déclenchement (4) qui ne présente pas l'élément d'entraînement (8) pouvant être enfoncé présente une cavité de verrouillage (24) pour l'enclenchement de l'extrémité, tournée vers la cavité de verrouillage (24) de l'élément d'entraînement (8).

3. Système de direction selon l'une quelconque des revendications précédentes, **caractérisé en ce que** la cavité de verrouillage (24) est un trou borgne cylindrique circulaire.

4. Système de direction selon l'une quelconque des revendications précédentes, **caractérisé en ce que** l'élément de déclenchement (4) est une bague de déclenchement avec un segment de déclenchement (12).

5. Système de direction selon l'une quelconque des revendications précédentes, **caractérisé en ce que** l'élément de déclenchement (4) est un disque de code d'un capteur d'angle de direction avec un segment de déclenchement.

6. Système de direction selon l'une quelconque des revendications précédentes, **caractérisé en ce que** l'extrémité de la partie, dépassant du décrochement (22), de l'élément d'entraînement (8) saisit par l'arrière le trou de passage (19).

7. Système de direction selon l'une quelconque des revendications précédentes, **caractérisé en ce que** l'extrémité, tournée vers le volant (2), de l'élément d'entraînement (8) s'engage dans la cavité de verrouillage (24) présente sur le volant (2) pour la liaison solidaire en rotation de l'élément de déclenchement (4).

8. Système de direction selon l'une quelconque des revendications précédentes, **caractérisé en ce que** l'extrémité, tournée vers le volant (2), de l'élément d'entraînement (8) est biseautée.

9. Système de direction selon l'une quelconque des revendications précédentes, **caractérisé en ce que** l'élément de ressort (9) est un ressort spiral, un ressort à lame, un ressort hélicoïdal, un ressort de traction, un ressort à disque ou similaires.
